## Europäisches Patentamt
## European Patent Office
## Office européen des brevets

(11) Publication number: **0 015 955**
**B1**

# EUROPEAN PATENT SPECIFICATION

(45) Date of publication of patent specification: **26.01.83**

(51) Int. Cl.³: **F 16 K 47/04**

(21) Application number: **79900423.9**

(22) Date of filing: **26.03.79**

(86) International application number:
**PCT/US79/00193**

(87) International publication number:
**WO 79/00947 15.11.79 Gazette 79/23**

(54) **FLOW FORCE BALANCED SPOOL VALVE.**

(30) Priority: **19.04.78 US 897894**

(43) Date of publication of application:
**01.10.80 Bulletin 80/20**

(45) Publication of the grant of the patent:
**26.01.83 Bulletin 83/4**

(84) Designated Contracting States:
**DE GB**

(56) References cited:
**US - A - 3 009 480**
**US - A - 3 160 174**
**US - A - 3 534 774**
**US - A - 3 556 155**
**US - A - 3 747 642**
**US - A - 4 009 864**
**US - A - 4 066 239**
**US - A - 4 122 867**
**US - A - 4 122 868**
**US - A - 4 126 155**

(73) Proprietor: **CATERPILLAR TRACTOR CO.**
**100 Northeast Adams Street**
**Peoria Illinois 61629 (US)**

(72) Inventor: **JOHNSON, Howard Leighton**
**608 Bethel Drive**
**Joliet, IL 60435 (US)**

(74) Representative: **Brunner, Michael John et al,**
**Gill Jennings & Every 53/64 Chancery Lane**
**London WC2A 1HN (GB)**

Courier Press, Leamington Spa, England.

Flow force balanced spool valve

This invention relates to spool valves and, more specifically, to a spool valve in which the action of flow forces is generally constant or balanced for any degree of opening of the valve.

The existence of fluid flow forces in spool valves and their effects have long been recognized. Depending upon the particular valve construction, its fluid flow pattern, and the pressures involved, flow forces may tend to oppose an operator's opening the valve or act in concert therewith at widely varying values dependent upon spool travel. In some instances, for one position of the spool the flow force may oppose the operator, while in another position of the spool is may aid the operator.

Consequently, precise control of the flow of fluid may be difficult to achieve to the disired degree because spool position will not be soley determined by a control force provided by an operator for the valve. When the flow force is assisting the operator force, the total force operating on the spool will be greater than that provided by the operator alone and the total force may vary according to spool position. The same is true when the flow forces are acting in opposition to the operator force and, of course, when flow forces can act both in concert and in opposition to the operator force, dependent upon spool travel, accurate placement of the spool through operator force at all positions along the path of travel of the spool becomes exceedingly difficult to attain.

One method of partially overcoming this type of problem is shown in US-A-4,066,239 which discloses a spool valve in which substantially equal forces in a single direction along the axis of the valve are caused to result in two distinct operating conditions of the valve so as to provide a substantially constant load on the spool and thus ease operation by ensuring that the force on the spool does not vary significantly between different operating positions. The specification shows an annular groove in the spool into which an axial metering slot extends from and between the lands on either side, the construction being such that when fluid is being metered through the slot between one of the spool lands and a fixed land surrounding the spool the force on the spool is substantially the same as when fluid is being metered through the slot between the other spool land and the fixed land. The end of the slot towards which fluid flows is undercut to form a cylindrical pocket which governs the generation of the biasing force on the valve.

However, there is a need for a spool valve wherein flow forces are substantially balanced and/or constant throughout the operating positions of the valve, regardless of cooperation with fixed lands.

Other examples of balanced spool valves are disclosed in US—A—2,747,612, US—A—3,198,212 and US—A—3,990,477.

According to the present invention a spool valve comprises a valve body having a bore intersecting a pair of axially spaced chambers and a spool reciprocally received within the bore and having two axially spaced lands separated by a groove, one of the lands cooperating with the fluid flow from one chamber to the other chamber, at least one shallow metering slot in the one land and opening directly into the groove through the side wall thereof, the slot having an increasing depth in the direction toward the groove, and an additional slot in the second land opening to the groove in alignment with the metering slot, the additional slot having a width greater than that of the metering slot, characterized in that the metering slot opens into the groove above the base of the groove and has, at any point along the slot, a cross-sectional area transverse to the axis of the spool less than the area of the top of the slot from that point to the end of the slot remote from the groove to provide in use a stream of fluid metered by the metering slot to flow substantially parallel to the axis of the spool across the groove, and that the additional slot has a ramp-like bottom extending from the adjacent side wall of the groove to the top of the second land, for producing, in use, as a result of fluid flow, a force on the spool in the direction of fluid flow offsetting the force on the spool in the opposite direction produced by flow forces acting in the metering slot.

One example of a spool valve according to the invention will now be described with reference to the accompanying drawings in which:—

Figure 1 is a fragmentary, sectional view of the spool valve;

Figure 2 is a fragmentary view of part of the spool of the spool valve with parts broken away for clarity;

Figure 3 is a sectional view taken approximately along the line 3—3 of Figure 2; and,

Figure 4 is a sectional view taken approximately along the line 4—4 of Figure 3.

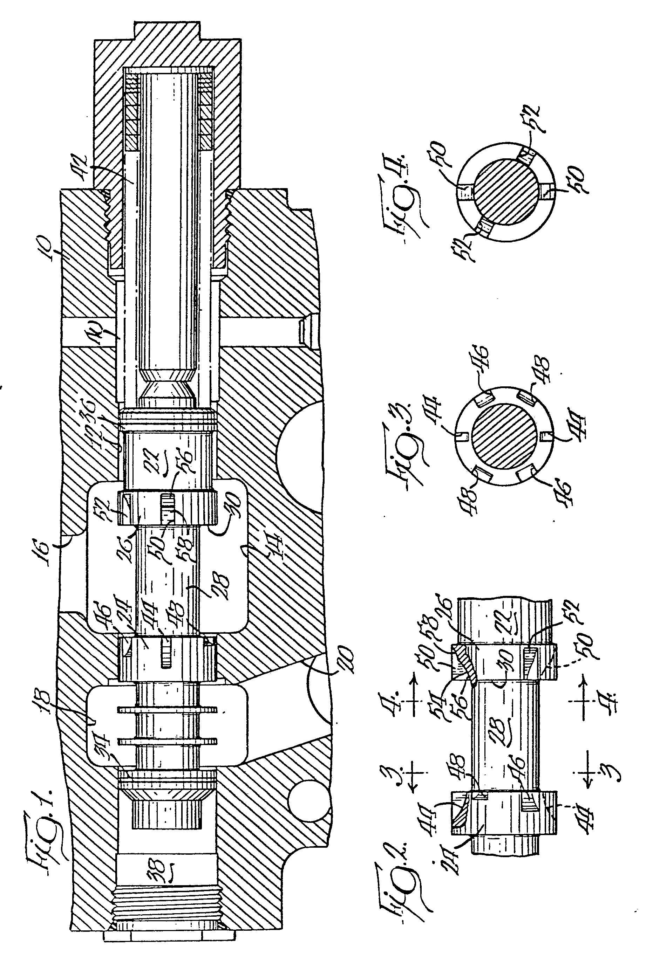

The spool valve shown in Figure 1 includes a valve body 10 having a bore 12 therein. A first annular groove 14 intercepts the bore 12 and is in fluid communication with an outlet port 16 through which fluid received in the annular groove 14 may be directed to a point of use or to reservoir.

Axially spaced along the length of the bore 12 from the annular groove 14 is an annular groove 18 which also intercepts the bore 12 and which is in fluid communication with a port 20 which receives fluid to be metered by the valve.

Reciprocally received within the bore 12 is a spool 22. The spool 22 includes axially spaced lands 24 and 26 which are separated by a groove 28. The groove 28 has a side wall 30 on the land 26 and defines a shoulder that is rather abrupt. As seen in Figure 1, the side wall 30 defining the shoulder is in a plane transverse (90°) to the longitudinal axis of the spool 22 and, for reasons to be seen, it is preferred that there be at least 90° between the side wall 30 and the longitudinal axis of the spool 22 measured on the side of the side wall 30 occupied by the land 26. The spool 22, includes seal bearing lands 34 and 36 at its opposite ends, such that the ends of the bore 12 define pressure chambers 38 and 40, respectively. Fluid under pressure may be directed to either one of the chambers 38 and 40 in any of a variety of known ways. For example, when the valve is employed as a flow control valve, a conduit (not shown) will connect the annular groove 14 to the chamber 38 while the chamber 40 will be connected to the downstream side of the usual main spool valve (not shown) employed in a typical system. The chamber 40 is also occupied by a spring 42 which abuts the righthand end of the spool 22 to bias the same towards the left, as viewed in Figure 1.

The land 24 is provided with a plurality of metering slots 44, 46 and 48 which opens to the groove 28. As best seen in Figure 3 there are two slots 44 diametrically opposed about the land 24, two slots 46, also diametrically opposed, and two slots 48 also diametrically opposed. Adjacent ones of the slots 44—48 are spaced apart angularly by about 60°.

The slots 44 and 46 are relatively shallow so that metering will occur through an opening which is transverse to the longitudinal axis of the spool 22 and not through an opening lying on the cylindrical surface of the land. In other words, the cross sectional area of each of the slots 44 and 46 taken transversely to the longitudinal axis of the spool at any point along the length of the slot will be less than the area of the top of the slot (that part of the slot that would fall within the surface of the land 24 if the slot were not present) from the particular point chosen to the end of the slot remote from the groove 28.

It will also be observed that all of the slots 44—48 have an increasing depth on the direction toward the groove 28.

When the spool 22 is shifted to the left as viewed in Figure 1, the slots 44 will first come into fluid communication with the annulus 18. Further leftward movement will bring the slots 46 into such fluid communication as well. Finally, additional leftward movement will bring the slots 48 into such fluid communication.

Because of the above-described shallow nature of at least the slots 44 and 46, the smallest opening in the flow path from the annulus 18 through the slots 44 and 46 to the annulus 14, will lie in a plane substantially transverse to the longitudinal axis of the spool 22 with consequence that an emanating jet of fluid will be directed generally parallel to the longitudinal axis of the spool 22 towards the land 26.

The land 26 is provided with additional slots 50 and 52 opening through the shoulder defined by the side wall 30. The slots 50 are aligned with the metering slots 44, while the slots 52 are aligned with the slots 46. The slots 50 and 52 provide exiting ramps for the jet streams of fluid emanating from the slots 44 and 46 into the annular groove 14. The bottoms of the slots 50 and 52 are designated 54 and are generally planar in a plane non-parallel to the longitudinal axis of the spool 22. Since the formation of perfectly planar bottoms 54 may be difficult, from a manufacturing standpoint, they may be formed of two or more arcuate sections 56 and 58 (Figure 2) as would result from two arcuate cuttings utilizing, for example, a Woodruff key cutter at different centers.

As can be seen from a comparison of Figures 3 and 4, the widths of at least some of the metering slots, in this case the metering slots 44, different from the widths of the aligned additional slots 50. Relative width selection can be based on desired characteristics by those skilled in the art with the knowledge of how the width affects operation, as will be described.

In typical prior art spool valve utilizing metering slots (such as US-A-3,198,212), the loading of the spring and the pressure drop across the metering orifice affect the total forces applied to the spool. As a spring, such as the spring 42, extends the spring force will fall off at a substantially linear rate. The pressure drop across the metering orifice will also change. As the metering orifice opens, the pressure drop will become smaller, although not in proportion to the size of the metering orifice. For example, the pressure drop may stay relatively constant over a spool travel providing partial flow to a point whereat full flow begins to occur. Thereafter, full pressure will drop.

As the valve 22 is moved towards the left, as viewed in Figure 1, the metering slots 44 will first be opened and a large pressure drop will occur, with the consequence that a very high velocity jet stream fo fluid will be directed substantially parallel to the longitudinal axis of the spool 22. Because of the smallness of the orifice, the width of the jet stream will be relatively small and the entire stream will exit into the annular groove 14 through the additioinal slot 50. Because of the inclination of the bottom 54 of the slot 50, very little force will be exerted against the land 26 due to the stream of fluid at this time. Consequently, flow forces will be essentially those provided by the reaction of the fluid entering the slot 44 from the annular groove 18 as a reactive force against the bottom of the slot 44. This force will aid that supplied by the spring 42.

As more and more of the metering slot 44 is exposed, the metering orifice will increase in size, with the consequence that the jet stream of fluid emanating therefrom will become wider and a portion thereof will begin to impinge on the shoulder defined by the groove side 30. As a result, a force will be generated caused by fluid striking the shoulder 30, which force will be in opposition to that provided by the spring 42 and which will counterbalance an increasing flow force caused by the reaction of fluid against the bottom of the metering slot 44 so that the net force due to flow forces remain substantially constant.

By providing a series of slots, such as the slots 44, 46 and 48, all having differing axial lengths, the ability to balance flow forces at a variety of differing spool positions is achieved. The width of the additional slots 50 and 52 affects the degree to which a force opposing the spring 40 is generated by fluid impinging upon the shoulder 30. The wider the additional slots 50 and 52, the less spring opposing force is generated by such impingement.

A spool valve made according to the invention balances flow forces. When made with a plurality of slots having differing axial lengths, the ability to achieve such a balance over an extremely wide range of spool positions is provided.

It will also be recognized that by pairing slots of equal axial length on opposite sides of the spool, equal forces will be present on both sides thereof to prevent any tendency of the spool 22 to cant and bind.

If desired, the shoulder 30 may be formed with a negative angle to provide a greater barrier for fluid emanating from the metering slots where a greater spring opposing force is desired. And, by varying the widths of the additional slots 50 and 52, the effectiveness of the shoulder 30 as a barrier can be controlled to achieve any desired characteristic in a valve.

Finally, as used herein, the term "slot" is not restricted to configurations such as those illustrated in the drawings, but may include, by way of example, drilled passages, grooves, etc.

## Claims

1. A spool valve comprising a valve body (10) having a bore (12) intersecting a pair of axially spaced chambers (14, 18); and a spool (22) reciprocally received within the bore (12), and having two axially spaced lands (24, 26) separated by a groove (28), one of the lands (24) cooperating with the bore (12) to selectively prevent or allow fluid flow from one chamber (18) to the other chamber (14), at least one shallow metering slot (44) in the one land (24) and opening directly into groove (28) through the side wall thereof, the slit (44) having an increasing depth in the direction toward the groove (28), and an additional slot (50) in the second land (26) opening to the groove (28) in alignment with the metering slot (44), the additional slot (50) having a width greater than that of the metering slot (44), characterized in that the metering slot (44) opens into the groove (28) above the base of the groove and has, at any point along the slot (44), a cross-sectional area transverse to the axial·of spool (22) less than the area of the top of the slot (44) from that point of the end of the slot (44) remote from the groove (28) to provide in use a stream of fluid metered by the metering slot (44) to flow substantially parallel to the axis of the spool (12) across the groove (28), and that the additional slot (50) has a ramp-like bottom (54) extending from the adjacent side wall (30) of the groove (28) to the top of the second land (26), for producing, in use, as a result of fluid flow, a force on the spool (22) in the direction of fluid flow, offsetting the force on the spool (22) in the opposite direction produced by flow forces acting in the metering slot (44).

2. A spool valve according to claim 1, wherein the side wall (30) of the groove (28) on the second land (26) is a surface of at least substantially 90° to the longitudinal axis of the spool (22) measured from the side thereof including the second land (26).

3. A spool valve according to claim 1 or claim 2, wherein the bottom (54) of the additional slot (50) is defined by at least two arcuate machined cuts (56, 58) having different centres of radius.

4. A spool according to any of claims 1 to 3, wherein there are a plurality of metering slots (44, 46, 48) in the one land (24) opening to the groove (28) through its side wall, the axial lengths of at least two of the metering slots (44, 46, 48) being different from one another.

## Revendications

1. Valve à tiroir comprenant un corps (10) dans lequel a été usiné un alésage (12) coupant deux chambres espacées axialement (14, 18); et une tiroir (22) reçu à mouvement alternatif dans l'alésage (12) et ayant deux portées espacées axialement (24, 26) séparées par une gorge (28), l'une des portées (24) coopérant avec l'alésage (12) pour empêcher ou permettre sélectivement à un fluide de circuler d'une chambre (18) à l'autre chambre (14), au moins une encoche de mesure ou de réglage peu profonde (44) dans la portée mentionnée en premier (24) et qui débouche directement dans la gorge (28) à travers la paroi latérale de celle-ci, la profondeur de l'encoche (44) augmentant en direction de la gorge (28), et une encoche supplémentaire (50) dans la seconde portée (26) débouchant dans la gorge (28), dans l'alignement de l'encoche de mesure (44), l'encoche supplémentaire (50) ayant une largeur supérieure à celle de l'encoche de mesure ou de réglage (44), caractérisée en ce que l'encoche de réglage (44) débouche dans la gorge (28) au-dessus de la base de celle-ci et a, en tout point de sa longueur une section dont l'aire, perpendiculairement à l'axe du tiroir (22), est plus petite que l'aire du sommet de l'encoche (44) à partir de ce point jusqu'à l'extrémité de l'encoche (44) qui est à l'opposé de la gorge (28) afin de produire, en fonctionnement, un courant de fluide réglé par l'encoche de mesure (44) pour s'écouler suivant une direction pratiquement parallèle à l'axe du tiroir (12) à travers la gorge (28), et en ce que l'encoche supplémentaire (50) a un fond semblable à une rampe (54) s'étendant de la paroi latérale adjacente (30) de la gorge (28) jusqu'au sommet de la seconde portée (26) afin de produire, en fonctionnement comme résultat de la circulation du fluide, une force s'exerçant sur le tiroir (22) dans la direction de circulation du fluide, et qui s'oppose à la force exercée sur le tiroir (22) dans la direction opposée produite par les forces de circulation agissant dans l'encoche de mesure ou de réglage (44).

2. Valve à tiroir selon la revendication 1, dans laquelle la paroi latérale (30) de la gorge (28) sur la seconde portée (26) est une surface formant un angle d'au moins 90° avec l'axe longitudinal du tiroir (22) mesuré à partir de son côté incluant la seconde portée (26).

3. Valve à tiroir selon la revendication 1 ou 2, dans laquelle le fond (54) de l'encoche supplémentaire (50) est défini par au moins deux surfaces d'usinage arquées (56, 58) ayant des centres de courbure différents.

4. Valve à tiroir selon l'une quelconque des revendications 1 à 3, dans laquelle il y a plusieurs encoches de mesure ou de réglage (44, 46, 48) dans une portée (24) débouchant dans la gorge (28) à travers sa paroi latérale, les longueurs axiales d'au moins deux des encoches (44, 46, 48) étant différentes l'une de l'autre.

### Patentansprüche

1. Schieberventil mit einem Ventilkörper (10), der eine ein Paar von mit axialem Abstand angeordneten Kammern (14, 18) schneidende Bohrung (12) aufweist, und mit einem hin- und herbewegbar in der Bohrung (12) aufgenommenen Schieber (22), der zwei mit Abstand angeordnete durch eine Nut (28) getrennte Stege (24, 26) besitzt, wobei einer der Stege (24) mit der Bohrung (12) zusammenarbeitet, um selektiv den Strömungsmittelfluß von einer Kammer (18) zur anderen Kammer (14) zu verhindern oder zu gestatten, wobei mindestens ein flacher Zumeßschlitz (44) in dem einen Steg (24) vorgesehen ist und sich direkt in die Nut (28) durch deren Seitenwand öffnet, und wobei ferner der Schlitz (44) eine in Richtung zur Nut (28) hin ansteigende Tiefe besitzt, und wobei ein zusätzlicher Schlitz (50) im zweiten Steg (26) sich zur Nut (28) hin in Ausrichtung mit dem Zumeßschlitz (44) öffnet, wobei der zusätzliche Schlitz (50) eine Breite größer als die des Zumeßschlitzes (44) aufweist, dadurch gekennzeichnet, daß der Zumeßschlitz (44) sich in die Nut (28) oberhalb der Basis der Nut öffnet und an jedem Punkt längs des Schlitzes (44) eine Querschnittsfläche quer zur Achse des Schiebers (22) aufweist, die kleiner ist als die Fläche der Oberseite des Schlitzes (44) gegenüber diesem Punkt bis zum Ende des Schlitzes (44) entfernt von der Nut (28), um so im Gebrauch einen durch den Zumeßschlitz (44) zugemessenen Strömungsmittelstrom vorzusehen, der im wesentlichen parallel zur Achse des Schiebers (12) über die Nut (28) läuft, und daß der zusätzliche Schlitz (50) einen rampenartigen Boden (44) aufweist, der sich von der benachbarten Seitenwand (30) der Nut (28) zur Oberseite des zweiten Stegs (26) hin erstreckt, um im Gebrauch infolge des Strömungsmittelflusses, an dem Schieber (22) eine Kraft in Richtung des Strömungsmittelflusses zu erzeugen, der die Kraft am Schieber (22) in der entgegengesetzten Richtung, erzeugt durch im Zumeßschlitz (44) wirkende Strömungskräfte, ausgleicht.

2. Schieberventil nach Anspruch 1, wobei die Seitenwand (30) der Nut (28) am zweiten Steg (26) eine Oberfläche mit mindestens im wesentlichen 90° zur Längsachse des Schiebers (22) ist, und zwar von der den zweiten Steg (26) umfassenden Seite aus gemessen.

3. Schieberventil nach Anspruch 1 oder 2, wobei der Boden (54) des zusätzlichen Schlitzes (50) durch mindestens zwei bogenförmig ausgearbeitete Schnitte (56, 58) definiert ist, die unterschiedliche Krümmungsmittelpunkte besitzen.

4. Schieber nach einem der Ansprüche 1 bis 3, wobei eine Vielzahl von Zumeßschlitzen (44, 46, 48) in dem einen Steg (24) vorgesehen sind, die sich zur Nut (28) durch deren Seitenwand öffnen, wobei die Axiallängen von mindestens zwei der Zumeßschlitze (44, 46, 48) voneinander unterschiedlich sind.

Fig.1.

Fig.2.

Fig.3.

Fig.4.

0015955